# EUROPÄISCHE PATENTSCHRIFT

(11) **EP 2 627 898 B1**
(45) Veröffentlichungstag und Bekanntmachung des Hinweises auf die Patenterteilung: **27.01.2016**
(21) Anmeldenummer: 11770053.4
(22) Anmeldetag: 10.10.2011
(51) Int. Cl.: F03D 1/06

(54) **SCHOTT EINER WINDENERGIEANLAGE**
BULKHEAD OF A WIND TURBINE
CLOISON D'ÉOLIENNE

(30) Priorität: 15.10.2010 DE 102010042530
(43) Veröffentlichungstag der Anmeldung: 21.08.2013
(73) Patentinhaber: Senvion GmbH, 22297 Hamburg (DE)
(72) Erfinder: BENDEL, Urs, 24787 Fockbek (DE)
(74) Vertreter: Seemann, Ralph
(86) Internationale Anmeldenummer: PCT/EP2011/005043
(87) Internationale Veröffentlichungsnummer: WO 2012/048835

(56) Entgegenhaltungen:
- DE-A1-102006 055 091
- US-A1- 2005 215 698
- US-A1- 2007 104 584
- US-A1- 2010 135 816

## Beschreibung

Die Erfindung betrifft ein Schott einer Windenergieanlage zur Anordnung an einem Rotorblattanschluss eines Rotorblatts, insbesondere an einer Rotornabe. Ferner betrifft die Erfindung ein Verfahren zum Herstellen eines Schotts einer Windenergieanlage, das an einem Rotorblattanschluss eines Rotorblatts anordbar oder angeordnet wird oder ist.

Außerdem betrifft die Erfindung eine Verwendung eines Schotts einer Windenergieanlage.

Windenergieanlagen sind im Stand der Technik bekannt. Hierbei weisen die Windenergieanlagen mindestens ein Rotorblatt auf, das an einer Rotornabe angeordnet ist. In der Blattwurzel des Rotorblatts ist aus Sicherheitsgründen ein Schott ausgebildet, so dass bei Wartungsarbeiten in der Rotornabe oder im Rotorblatt Personal bei entsprechender Positionierung auf dem Schott steht und Wartungsarbeiten durchführen kann.

Um aus der Rotornabe in das Rotorblatt zu gelangen, verfügt das Schott in der Regel über eine Luke bzw. eine Durchsteigeluke in der Mitte des Schotts.

In DE 20 2004 003 521 U1 ist eine innen begehbare Rotornabe beschrieben, die ein im Bereich ihres Ringflansches angeordnetes Aussteifungsschott aufweist. Dieses Aussteifungsschott weist in der Mitte eine Durchsteigeöffnung für das Wartungspersonal auf.

Ferner ist in DE 10 2006 055 091 A1 ein Schott einer Windenergieanlage offenbart, das am Rotorblattanschluss eines Rotorblatts angeordnet oder anordbar ist.

In US 2005/0215698 A1 sind allgemein faserverstärkte thermoplastische Folien mit Oberflächenbelägen beschrieben. Hierbei ist ein Verbundfolienmaterial (composite sheet material) offenbart, wobei eine poröse Kernschicht ein thermoplastisches Material und 20 Gew. -% bis 80 Gew.-% Fasern aufweist. Ferner weist das Verbundmaterial eine Haut ("skin") mit einem begrenzenden Sauerstoffindex von mehr als 22, nach ISO 4589 auf.

Ausgehend von diesem Stand der Technik besteht die Aufgabe der vorliegenden Erfindung darin, ein Schott einer Windenergieanlage weiterzubilden, so dass das Schott auch bei Rotorblättern mit einem größeren Blattanschlussdurchmesser einfach zu handhaben ist.

Gelöst wird diese Aufgabe durch ein Schott einer Windenergieanlage zur Anordnung an einem Rotorblattanschluss eines Rotorblatts, insbesondere eines Rotorblatts an einer Rotornabe, wobei das Schott einen Kernkörper aufweist, auf dem Kernkörper beidseitig jeweils eine Schicht aus glasfaserverstärktem Kunststoff (GFK) angeordnet ist und wobei auf einer Seite eine Schicht aus glasfaserverstärktem Kunststoff (GFK) ein Metallschichtkörper angeordnet ist.

Durch die Weiterbildung des Schotts wird ein Schott einer Windenergieanlage bereitgestellt, das in oder an der Blattwurzel eines Rotorblatts, d.h. am Rotorblattanschluss, oder im Bereich zwischen der Blattwurzel eines Rotorblatts und einer Rotornabe unter Verwendung von entsprechenden Befestigungsmitteln angeordnet wird oder ist. Daher wird ein Schott für die Anordnung in der Blattwurzel eines Rotorblatts oder für die Anordnung im Bereich zwischen der Blattwurzel des Rotorblatts und der Rotornabe bereit gestellt.

Gemäß der Erfindung ist für die Herstellung des Schotts vorgesehen, dass ein Kernkörper verwendet wird, wobei auf beiden Seiten des Kernkörpers jeweils glasfaserverstärkter Kunststoff als Laminatschicht, beispielsweise in Form von Gelegen oder dergleichen, aufgebracht wird und mit dem Kernkörper verbunden wird. Darüber hinaus wird auf einer Seite des Schotts eine dünne Metallschicht in Form eines Metallschichtkörpers angeordnet und mit der Seite bzw. der Schicht aus glasfaserverstärktem Kunststoff verbunden. Hierdurch wird ein stabiles und leichtes Schott, das in oder an der Blattwurzel oder an einem Rotorblattanschluss eines Rotorblatts angeordnet wird, ausgebildet, wobei insbesondere der Metallschichtkörper derart angeordnet bzw. positioniert wird, dass der Metallschichtkörper zur Innenseite bzw. zum Innenraum des Rotorblatts weist oder orientiert ist.

Als glasfaserverstärkter Kunststoff werden Glasfasern, eingebettet beispielsweise in duroplastischen Polymeren, wie z.B. ungesättigtem Polyesterharz oder Epoxidharz, bereit gestellt und auf dem Kernkörper angeordnet.

Darüber hinaus wird als steifer, mechanisch stabiler Kernkörper ein Material verwendet, das gegenüber Sperrholz als Kernmaterial eine geringere spezifische Dichte hat, so dass aufgrund der Porösität des Kernkörpers ein steifer poröser Kernkörper bereit gestellt wird, der bei gleichen Abmessungen gegenüber einem Kernkörper z.B. aus Sperrholz ein geringes Gewicht aufweist. Insbesondere werden Kernkörper aus Kunststoffschäumen, Balsaholz oder Metallschäumen bevorzugt. Insbesondere bei Verwendung von Kunststoffschäumen oder Metallschäumen, aber auch bei Balsaholz, handelt es sich bei dem Kernkörper somit um einen Schaumkernkörper. Balsaholz ist sehr porös und weist ähnliche Eigenschaften auf wie ein Kunststoffschaum.

Insbesondere weist der verwendete Kernkörper für das Schott in allen drei Raumrichtungen (X-, Y-, Z-Richtung) ein gleichförmiges, (nahezu) isotropes Verhalten auf, wobei der Kernkörper selbst poröse, schaumartige Kernstrukturen aufweist.

Durch die erfindungsgemäße Ausführung des Schotts, das im Rahmen der Erfindung nicht als Aussteifungsschott ausgebildet ist, wird ein Strukturbauteil für ein Rotorblatt sowie für einen Rotor bereit gestellt, das in oder an der Rotorblattwurzel angeordnet ist, wobei erfindungsgemäß das Schott ein geringes Gewicht sowie eine hohe Festigkeit aufweist. Darüber hinaus ist durch die Ausbildung eines Metallschichtkörpers auf einer Seite des Schotts sichergestellt, dass die Erosion durch Partikel im Rotorblattinneren herabgesetzt oder gar vermieden wird.

Hierdurch wird ein Schott in mehrlagiger Sandwichbauweise bereit gestellt. Dabei wird die Schicht aus glasfaserverstärktem Kunststoff auf beide Seiten des Kernkörpers auflaminiert.

Dazu ist in einer Weiterbildung des Schotts vorgesehen, dass der Kernkörper aus einem Polymer oder aus einem Leichtmetallschaum, insbesondere Aluminiumschaum, oder Balsaholz, hergestellt ist.

Vorzugsweise ist der Kernkörper aus einem dichten Kunststoffschaum hergestellt, wobei insbesondere der Kernkörper aus Polyvinylchlorid (PVC) oder Polyethylen (PET) hergestellt ist.

Ferner sind die Schichten aus glasfaserverstärktem Kunststoff (GFK) aus Gelegen hergestellt, wobei insbesondere die Faserausrichtung der Fasern in den GFK-Schichten unidirektional, orthotrop oder quasi isotrop ausgebildet ist.

Ferner zeichnet sich das Schott dadurch aus, dass das Schott mit einer oder mehreren Durchsteigeöffnungen für Wartungspersonal bzw. für Servicemitarbeiter versehen ist, wobei insbesondere die Durchsteigeöffnungen verschließbar ausgebildet sind. Durch die Durchsteigeöffnungen wird es möglich, dass bei großen Rotorblättern das Schott als Plattform für die Inspektion oder Wartung eines Rotorblatts verwendet werden kann. Hierbei ist insbesondere vorgesehen, dass das Schott eine oder mehrere Durchsteigeöffnungen aufweist, die insbesondere verschließbar oder abdeckbar ausgebildet sind.

Dadurch, dass eine oder mehrere Durchsteigeöffnungen am Schott vorgesehen sind, ist es beispielsweise beim Herstellen von großen Rotornaben oder großen Rotorblättern möglich, die Zugangsmöglichkeiten und somit die Wartung dieser Bauteile zu erleichtern. Insbesondere ergibt sich ein erleichterter Zugang zu den Rotorblättern dadurch, wenn mehrere Durchsteigeöffnungen am äußeren Rand des Schotts ausgebildet sind.

Im Rahmen der Erfindung ist es ebenfalls möglich, dass an dem Schott nur eine, insbesondere verschließbare, Durchsteigeöffnung ausgebildet ist. Hierzu sind an den Durchsteigeöffnungen, vorzugsweise angelenkte oder verschwenkbare, Klappen oder Abdeckungen vorgesehen

Überdies zeichnet sich eine Ausführungsform des Schotts dadurch aus, dass der Kernkörper eine Dicke zwischen 15 mm und 35 mm, insbesondere zwischen 20 mm und 30 mm, aufweist und/oder die Schichten aus glasfaserverstärktem Kunststoff (GFK) eine Dicke zwischen 1 mm und 5 mm, insbesondere zwischen 2 mm bis 4 mm, jeweils aufweisen und/oder der Metallschichtkörper eine Dicke zwischen 0,1 mm und 0,8 mm, insbesondere zwischen 0,2 bis 0,5 mm, aufweist. Hierdurch ist es möglich, dass das erfindungsgemäße Schott eine Dicke (im Durchmesser) zwischen 17,1 mm bis 45,8 mm aufweist. Dadurch wird ein Schott bereit gestellt, das bei einem Durchmesser zwischen 1,5 m bis 3,5 m eine ausreichende Festigkeit aufweist, so dass gefahrlos eine oder mehrere Servicepersonen auf dem Schott bei Anordnung zwischen einer Rotornabe und einem Rotorblatt sicher stehen können.

Darüber hinaus zeichnet sich das erfindungsgemäß hergestellte Schott dadurch aus, dass es aufgrund seiner Sandwichbauweise gegenüber einem Schott beispielsweise mit einem Kern aus Sperrholz sehr leicht ist und dadurch bei der Montage von ein oder zwei Personen aufgrund des geringen Gewichts einfach zu handhaben ist, wodurch die Montage des Schotts beispielsweise mit einem Durchmesser von 3,0 m auf einfache Weise möglich ist, um dieses Schott im Bereich der Rotorblattwurzel des Rotorblatts zu positionieren bzw. anzuordnen.

Des Weiteren ist insbesondere vorgesehen, dass der Metallschichtkörper aus einem nichtrostenden Metall, insbesondere Edelstahl, oder aus Aluminium hergestellt ist.

Des Weiteren zeichnet sich das Schott in einer Weiterbildung dadurch aus, dass der Metallschichtkörper mit der Schicht aus glasfaserverstärktem Kunststoff, insbesondere unlösbar, durch Kleben oder Schrauben oder Nieten verbunden ist.

Außerdem wird die Aufgabe gelöst durch ein Verfahren zum Herstellen eines Schotts einer Windenergieanlage, das an einem Rotorblattanschluss eines Rotorblatts anordbar oder angeordnet ist oder wird, das dadurch weitergebildet wird, dass auf einem Kernkörper auf jeweils einer Seite eine Schicht aus glasfaserverstärktem Kunststoff (GFK) aufgebracht wird und auf einer Seite auf einer Schicht aus glasfaserverstärktem Kunststoff ein Metallschichtkörper angeordnet wird und der Metallschichtkörper mit der Schicht aus glasfaserverstärktem Kunststoff, insbesondere unlösbar, verbunden wird.

Ferner zeichnet sich das Verfahren dadurch aus, dass das Schott wie voranstehend beschrieben ausgebildet oder hergestellt wird.

Außerdem wird die Aufgabe gelöst durch eine Verwendung eines Schotts einer Windenergieanlage zur Anordnung an einem Rotorblattanschluss eines Rotorblatts, insbesondere an einer Rotorblattwurzel des Rotorblatts, wobei insbesondere der Metallschichtkörper zur Innenseite des Rotorblatts angeordnet wird oder ist. Zur Vermeidung von Wiederholungen wird auf die obigen Ausführungen zur Ausgestaltung eines Schotts ausdrücklich verwiesen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine schematische Darstellung einer Windenergieanlage und
- Fig. 2: eine perspektivische Ansicht eines Rotorblatts mit einem erfindungsgemäßen Schott.
- Fig. 3: eine perspektivische Darstellung einer Windenergieanlage im Ausschnitt mit dem prinzipiellen Aufbau eines erfindungsgemäßen Schotts eines Rotorblatts.

In den folgenden Figuren sind jeweils gleiche oder gleichartige Elemente bzw. entsprechende Teile mit denselben Bezugsziffern versehen, so dass von einer entsprechenden erneuten Vorstellung abgesehen wird.

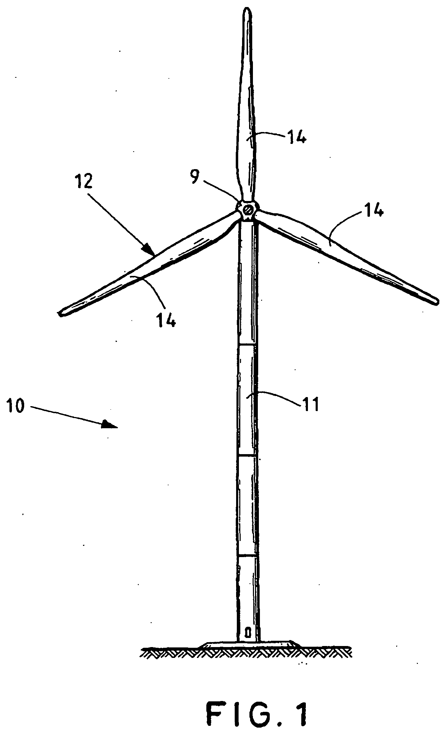

Fig. 1 zeigt eine schematische Darstellung einer Windenergieanlage 10. Die Windenergieanlage 10 weist einen Turm 11 auf und einen Rotor 12, der drei Rotorblätter 14 umfasst, die auf einer Rotornabe angebracht sind. Die Rotornabe 9 ist mit einer Rotorwelle verbunden. Bei Windanfall dreht sich der Rotor 12 in an sich bekannter Weise. Hierdurch kann Leistung von, einem an den Rotor 12 bzw. an den über die Rotornabe 9 und die Rotorwelle 13 angeschlossenen Generator erzeugt werden und in ein Verbrauchernetz abgegeben werden.

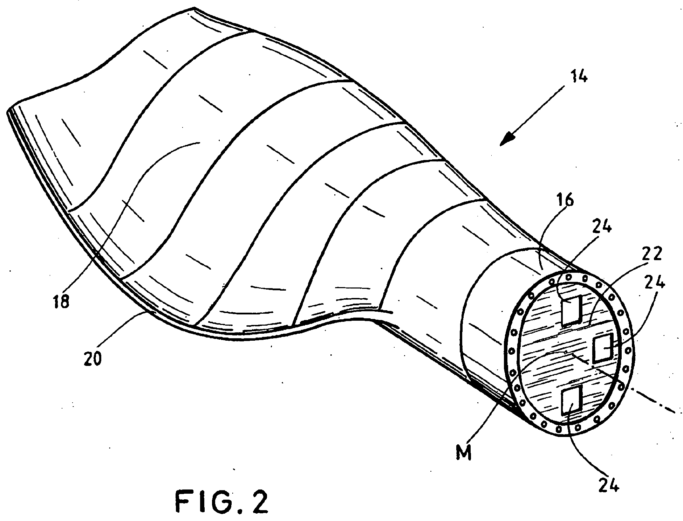

Fig. 2 zeigt einen unteren Abschnitt des Rotorblatts 14 in einer perspektivischen Darstellung. Das Rotorblatt 14 verfügt auf der der Rotornabe zugewandten Seite über eine so genannte Rotorblattwurzel 16, die im Querschnitt im Allgemeinen kreisförmig bzw. kreisrund ausgebildet ist. Das Rotorblatt 14 selbst ist im Innenraum hohl. Das Rotorblatt 14 ist zwischen der Rotorblattwurzel 16 und der Rotorblattspitze profiliert ausgebildet und verfügt über eine Druckseite 18. Der Druckseite 18 ist auf der hier nicht bezeichneten gegenüber liegenden Seite die dazugehörige Saugseite zugeordnet.

Die entsprechenden Rotorblattprofile entlang der Längsachse des Rotorblatts 14 laufen an der Hinterkante 20 des Rotorblatts 14 zusammen. Im Bereich der Rotorblattwurzel 16 ist ein Schott 22 in dem Rotorblatt 14 angeordnet, wobei es in einer Ausgestaltung möglich ist, das Schott 22 in die Rotorblattwurzel 16 einzukleben. Das Schott 22 ist fest an der Rotorblattwurzel 16 montiert oder darin eingesetzt.

Das Schott 22 ist ebenfalls kreisförmig ausgebildet und verfügt über wenigstens eine, im dargestellten Fall drei, Durchsteigeöffnungen 24, die außerhalb des Mittelpunkts M des Schotts 22 angeordnet sind. Die Durchsteigeöffnungen 24 sind so dimensioniert, dass eine Person nach Öffnung einer Luke an der Durchsteigeöffnung 24 von der Rotornabe in den Innenraum des Rotorblatts 14 steigen kann.

Dadurch, dass mehrere Durchsteigeöffnungen am Schott 22 ausgebildet sind, wird ein einfacher und sicherer Ein- bzw. Ausgang an den Rotorblättern 14 auch bei großen Durchmessern der Rotorblattwurzel 16, beispielsweise größer als 2 m oder 2,5 m oder 3,0 m sichergestellt.

Durch das Schott 22 wird ein Hineinfallen von Gegenständen oder von Personen aus der Rotornabe in das Rotorblatt 14 verhindert sowie das Rotorblatt 14 gegenüber der Rotornabe bezüglich Schmutz und/oder Feuchtigkeit abgedichtet. Gleichzeitig kann das Schott 22 als entsprechende Arbeitsplattform bei Wartungsarbeiten an der Rotornabe oder am Rotorblatt 14 eingesetzt werden. Die Durchsteigeöffnungen 24 sind am äußeren Umfang des Schotts 22 verteilt angeordnet, wobei die Durchsteigeöffnungen 24 um einen Winkel von 90° versetzt angeordnet sind. Dadurch ist es möglich, beispielsweise die Durchsteigeöffnungen 24 in einer entsprechenden 12 Uhr-, 3 Uhr- und 6 Uhr-Position (bzw. 3 Uhr-, 6 Uhr-, 9 Uhr-Position) anzuordnen, wenn das Rotorblatt 14 zu Wartungsarbeiten mit der Vorderkante, d.h. mit der Anströmseite bei horizontal angeordnetem Rotorblatt 14 an der Windenergieanlage gelagert ist. Diese Positionen entsprechen den Anordnungen der Durchsteigeöffnungen im Bereich der Druckseite, der Nase und der Saugseite.

Darüber hinaus ist in Fig. 2 die Drehachse 26 des Rotorblatts 14 mit einer strich-punktierten Linie eingezeichnet, die senkrecht das Schott 22 im Punkt M im geometrischen Sinne durchsticht.

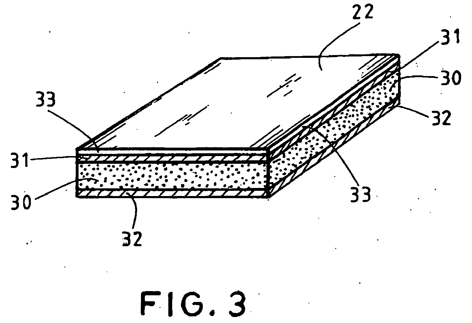

Fig. 3 zeigt in einer perspektivischen Ansicht den prinzipiellen Aufbau eines erfindungsgemäßen Schotts 22 in einer schematischen Teilansicht. Das Schott 22 weist einen porösen Kernkörper 30 auf, der insbesondere als Schaumkernkörper aus einem Kunststoffschaum oder einem Metallschaum oder aus Balsaholz hergestellt ist. Auf der Ober- und Unterseite des Kernkörpers 30 sind jeweils GFK-Schichten 31, 32, d.h. Schichten mit glasfaserverstärktem Kunststoff, aufgebracht und mit der Oberfläche des Kernkörpers 30 jeweils unter Ausbildung einer Klebeverbindung verbunden.

Auf die oberseitige GFK-Schicht 31 ist ein nichtrostendes Blechteil 33 in Form eines Metallschichtkörpers angeordnet, wobei das Blechteil 33 vollflächig die obere GFK-Schicht 31 abdeckt.

In einer Ausgestaltung ist es möglich, dass mehrere Blechteile 33 auf der zur Innenseite eines Rotorblatts angeordneten oberen GFK-Schicht 31 mehrteilig, z.B. segmentiert, angeordnet sind, wobei das Blechteil oder die Blechteile 33 mit der oberseitigen GFK-Schicht 31 miteinander verklebt sind. Darüber hinaus ist es in einer weiteren Ausgestaltung möglich, dass das Blechteil 33 unter Verwendung von Nieten oder anderen Befestigungsmitteln mit der oberen GFK-Schicht 31 verbunden wird.

Insbesondere ist das Blechteil 33 als Edelstahlblechteil oder als Aluminiumblech ausgebildet, wodurch die Oberseite des Schotts 22 entsprechend verkleidet wird.

Durch den in Fig. 3 dargestellten prinzipiellen Aufbau des Schotts 22 für ein Rotorblatt bzw. für einen Rotorblattanschluss wird ein Bauteil für die Rotorblattwurzel bereit gestellt, das sehr leicht zu handhaben ist und dadurch auf einfache Weise in einer Rotorblattwurzel eines Rotorblatts angeordnet und befestigt wird.

Das erfindungsgemäße mehrschichtige bzw. vierschichtige Schott zeichnet sich ferner durch eine hohe Festigkeit und ein geringes Gewicht aus. Durch die Anordnung des Blechteils 33 zur Innenseite des Rotorblatts wird das Schott auch effektiv gegen Erosion durch Partikel aus dem Inneren des Rotorblatts geschützt.

### Bezugszeichenliste

- 9: Rotornabe
- 10: Windenergieanlage
- 11: Turm
- 12: Rotor
- 14: Rotorblatt
- 16: Rotorblattwurzel
- 18: Druckseite
- 20: Hinterkante
- 22: Schott
- 24: Durchsteigeöffnung
- 30: Kernkörper
- 31: GFK-Schicht
- 32: GFK-Schicht
- 33: Blechteil
- M: Mittelpunkt

## Patentansprüche

1. Schott (22) einer Windenergieanlage (10) zur Anordnung an einem Rotorblattanschluss eines Rotorblatts (14), insbesondere an einer Rotornabe (9), wobei das Schott (22) einen Kernkörper (30) aufweist, auf dem Kernkörper (30) beidseitig jeweils eine Schicht (31, 32) aus glasfaserverstärktem Kunststoff angeordnet ist und wobei auf einer Seite einer Schicht (31) aus glasfaserverstärktem Kunststoff ein Metallschichtkörper (33) angeordnet ist.

2. Schott (22) nach Anspruch 1, **dadurch gekennzeichnet, dass** der Kernkörper (30) aus einem Polymer oder aus einem Leichtmetallschaum, insbesondere Aluminiumschaum, oder aus Balsaholz hergestellt ist.

3. Schott (22) nach Anspruch 1 oder 2, **dadurch gekennzeichnet, dass** der Kernkörper (30) aus Polyvinylchlorid (PVC) oder Polyethylen (PET) hergestellt ist.

4. Schott (22) nach einem der Ansprüche 1 bis 3, **dadurch gekennzeichnet, dass** die Schichten (31, 32) aus glasfaserverstärktem Kunststoff aus Gelegen hergestellt sind.

5. Schott (22) nach einem der Ansprüche 1 bis 4, **dadurch gekennzeichnet, dass** das Schott (22) mit einer oder mehreren Durchsteigeöffnungen versehen ist, wobei insbesondere die Durchsteigeöffnungen verschließbar ausgebildet sind.

6. Schott (22) nach einem der Ansprüche 1 bis 5, **dadurch gekennzeichnet, dass** der Kernkörper (30) eine Dicke zwischen 15 mm und 35 mm, insbesondere zwischen 20 mm und 30 mm, aufweist, und/oder die Schichten (31, 32) aus glasfaserverstärktem Kunststoff eine Dicke zwischen 1 mm und 5 mm, insbesondere zwischen 2 mm bis 4 mm, jeweils aufweisen und/oder der Metallschichtkörper (33) eine Dicke zwischen 0,1 mm und 0,8 mm, insbesondere zwischen 0,2 bis 0,5 mm, aufweist.

7. Schott (22) nach einem der Ansprüche 1 bis 6, **dadurch gekennzeichnet, dass** der Metallschichtkörper (33) aus einem nicht rostenden Metall, insbesondere Edelstahl, oder aus Aluminium hergestellt ist.

8. Schott (22) nach einem der Ansprüche 1 bis 7, **dadurch gekennzeichnet, dass** der Metallschichtkörper (33) mit der Schicht (31) aus glasfaserverstärktem Kunststoff, insbesondere unlösbar, durch Kleben oder Schrauben oder Nieten verbunden ist.

9. Verfahren zum Herstellen eines Schotts (22) einer Windenergieanlage, das an einem Rotorblattanschluss eines Rotorblatts anordbar ist oder angeordnet wird oder ist, **dadurch gekennzeichnet, dass** auf einem Kernkörper (30) auf jeweils einer Seite eine Schicht (31, 32) aus glasfaserverstärktem Kunststoff aufgebracht wird und auf einer Seite auf eine Schicht (31) aus glasfaserverstärktem Kunststoff ein Metallschichtkörper (33) angeordnet wird und der Metallschichtkörper (33) mit der Schicht (31) aus glasfaserverstärktem Kunststoff verbunden wird.

10. Verfahren nach Anspruch 9, **dadurch gekennzeichnet, dass** ein Schott (22) nach einem der Ansprüche 1 bis 8 ausgebildet oder hergestellt wird.

11. Verwendung eines Schotts (22) einer Windenergieanlage (10) nach einem der Ansprüche 1 bis 8 zur Anordnung an einem Rotorblattanschluss eines Rotorblatts (14), wobei insbesondere der Metallschichtkörper (33) zur Innenseite des Rotorblatts (14) angeordnet wird oder ist.

## Claims

1. A bulkhead (22) of a wind turbine (10) for arrangement on a rotor blade connection of a rotor blade (14), in particular on a rotor hub (9), wherein the bulkhead (22) has a core body (30), a layer (31, 32) of fiber-glass-reinforced plastic is arranged respectively on both sides on the core body (30) and wherein a metal layer body (33) is arranged on one side of a layer (31) made of fiber-glass-reinforced plastic.

2. The bulkhead (22) according to claim 1, **characterized in that** the core body (30) is made of a polymer or of a light metal foam, in particular aluminum foam, or of balsa wood.

3. The bulkhead (22) according to claim 1 or 2, **characterized in that** the core body (30) is made of polyvinyl chloride (PVC) or polyethylene (PET).

4. The bulkhead (22) according to one of claims 1 to 3, **characterized in that** the layers (31, 32) made of fiber-glass-reinforced plastic are made of scrims.

5. The bulkhead (22) according to one of claims 1 to 4, **characterized in that** the bulkhead (22) is provided with one or more climb-through openings, wherein in particular the climb-through openings are designed in a lockable manner.

6. The bulkhead (22) according to one of claims 1 to 5, **characterized in that** the core body (30) has a thickness between 15 mm and 35 mm, in particular between 20 mm and 30 mm, and/or the layers (31, 32) made of fiber-glass-reinforced plastic each have a thickness between 1 mm and 5 mm, in particular between 2 mm and 4 mm, and/or the metal layer body (33) has a thickness between 0.1 mm and 0.8 mm, in particular between 0.2 and 0.5 mm.

7. The bulkhead (22) according to one of claims 1 to 6, **characterized in that** the metal layer body (33) is made of a rustproof metal, in particular stainless steel, or of aluminum.

8. The bulkhead (22) according to one of claims 1 to 7, **characterized in that** the metal layer body (33) is connected with the layer (31) made of fiber-glass-reinforced plastic, in particular unreleasably, by gluing or screwing or riveting.

9. A method for producing a bulkhead (22) of a wind turbine (22), which is arrangeable or will be or is arranged on a rotor blade connection of a rotor blade, **characterized in that** a layer (31, 32) made of fiber-glass-reinforced plastic is applied to a core body (30) on respectively one side and a metal layer body (33) is arranged on one side on a layer (31) made of fiber-glass-reinforced plastic and the metal layer body (33) is connected with the layer (31) made of fiber-glass-reinforced plastic.

10. The method according to claim 9, **characterized in that** a bulkhead (22) is designed or produced according to one of claims 1 to 8.

11. A use of a bulkhead (22) of a wind turbine (10) according to one of claims 1 to 8 for arrangement on a rotor blade connection of a rotor blade (14), wherein in particular the metal layer body (33) will be or is arranged towards the inside of the rotor blade (14).

## Revendications

1. Cloison étanche (22) pour une installation à énergie éolienne (10) qui est disposée au niveau d'une connexion de pale de rotor d'une pale de rotor (14), en particulier à un moyeu de rotor (9), dans lequel la cloison étanche (22) comprend un corps formant âme (30), une couche (31, 32) en fibre de verre renforcé de matière plastique étant disposée sur chacun des deux côtés de ce corps formant âme (30), et dans lequel un corps formant couche métallique (33) est disposé sur un côté d'une couche (31) en fibre de verre renforcé de matière plastique.

2. Cloison étanche (22) selon la revendication 1, **caractérisé en ce que** le corps formant âme (30) est constitué d'un polymère ou d'une mousse de métal léger, en particulier une mousse d'aluminium ou de bois de balsa.

3. Cloison étanche (22) selon la revendication 1 ou la revendication 2, **caractérisé en ce que** le corps formant âme (30) est constitué de chlorure de polyvinyle (PVC) ou de polyéthylène (PET).

4. Cloison étanche (22) selon l'une quelconque des revendications 1 à 3, **caractérisé en ce que** les couches (31, 32) en fibre de verre renforcée de matière plastique sont constitués de canevas.

5. Cloison étanche (22) selon l'une quelconque des revendications 1 à 4, **caractérisé en ce que** la cloison étanche (22) inclut une ou plusieurs ouvertures d'accès, les ouvertures de passage étant en particulier aptes à être fermées.

6. Cloison étanche (22) selon l'une quelconque des revendications 1 à 5, **caractérisé en ce que** le corps formant âme (30) présente une épaisseur comprise entre 15 mm et 35 mm, en particulier entre 20 mm et 30 mm, et / ou en ce que les couches (31, 32) constitués de fibre de verre renforcée de matière plastique présentent chacune une épaisseur comprise entre 1 mm et 5 mm, en particulier entre 2 mm et 4 mm, et / ou **en ce que** le corps formant couche métallique (33) a une épaisseur comprise entre 0,1 mm et 0,8 mm, en particulier entre 0, 2 mm et 0,5 mm.

7. Cloison étanche (22) selon l'une quelconque des revendications 1 à 6, **caractérisé en ce que** le corps formant couche métallique (33) est fabriqué en un métal qui ne rouille pas, notamment en acier inoxydable ou en aluminium.

8. Cloison étanche (22) selon l'une quelconque des revendications 1 à 7, **caractérisé en ce que** le corps formant couche métallique (33) est relié à la couche (31) de fibres de verre renforcée de matière plastique en particulier de manière non séparable, au moyen d'un adhésif ou de vis ou de rivets.

9. Procédé de fabrication d'une cloison (22) pour une éolienne, qui est apte à être disposée ou est disposée au niveau d'une connexion de pale de rotor d'une pale de rotor, **caractérisé en ce qu'**une couche (31, 32) en fibres de verre renforcée de matière plastique est disposées de chaque côté d'un corps formant âme (30), et **en ce qu'**est appliquée sur une face d'une couche (31) en fibre de verre renforcée de matière plastique, un corps formant couche métallique (33), et le corps formant couche métallique (33) étant relié à la couche (31) en fibre de verre renforcée de matière plastique.

10. Procédé selon la revendication 9, **caractérisé en ce qu'**une cloison étanche (22) est formée ou produite selon l'une quelconque des revendications 1 à 8.

11. Utilisation d'une cloison étanche (22) pour une installation (10) à énergie éolienne selon l'une quelconque des revendications 1 à 8, pour un agencement sur une connexion de pale de rotor d'une pale de rotor (14), le corps formant couche métallique (33) étant en particulier disposé ou apte à être disposé à l'intérieur de la pale de rotor (14).
